**Europäisches Patentamt**

(19) **European Patent Office**

**Office européen des brevets**

(11) Veröffentlichungsnummer: **0 024 514**
**B1**

(12) # EUROPÄISCHE PATENTSCHRIFT

(45) Veröffentlichungstag der Patentschrift:
21.12.83

(51) Int. Cl.³: **B 01 D 27/10**

(21) Anmeldenummer: 80103878.7

(22) Anmeldetag: 08.07.80

(54) Filteranordnung zum Filtern von Flüssigkeiten, insbesondere Motoröl.

(30) Priorität: 12.07.79 HU AA000935

(43) Veröffentlichungstag der Anmeldung:
11.03.81 Patentblatt 81/10

(45) Bekanntmachung des Hinweises auf die Patenterteilung:
21.12.83 Patentblatt 83/51

(84) Benannte Vertragsstaaten:
DE FR GB IT

(56) Entgegenhaltungen:
DE - A - 1 611 051
DE - A - 2 256 463
DE - A - 2 434 075
DE - A - 2 840 117
US - A - 3 397 793

(73) Patentinhaber: **ARMAFILT Egyesült Müszaki Tömitö és Gépszakmai Ipari Szövetkezet, Reitter F. u. 37., Budapest XIII (HU)**

(72) Erfinder: **Sütö, Ferenc, Dipl.-Ing., Váczi Mihály-ut 2/a., 2310 Szigetszentmiklos (HU)**
Erfinder: **Fodor, Jozsef, Dipl.-Ing., Naphegy tér 5/b, 1016 Budapest (HU)**
Erfinder: **Siegfried, Frigyes, Radnoti M. u. 29., 1137 Budapest (HU)**
Erfinder: **Gyárfás, Jòzsef, Vörösváry u. 9., 1035 Budapest (HU)**

(74) Vertreter: **Viering, Hans-Martin, Dipl.-Ing. et al, Patentanwälte Viering & Jentschura Steinsdorfstrasse 6, D-8000 München 22 (DE)**

## Filteranordnung zum Filtern von Flüssigkeiten, insbesondere Motoröl

Die Erfindung betrifft eine Filteranordnung zum Filtern von Flüssigkeiten, insbesondere zum Filtern von Motorenöl.

Es ist bekannt, daß die Schmieröle im Verlauf ihrer Benutzung durch die Schmierprozesse Veränderungen erleiden, als deren Folge die Schmiereigenschaften schlechter werden. Einige der im Verschleißprozeß der Metallteile in das Öl gelangenden Strukturelemente (z. B. Perlit) verursachen abrasiven Verschleiß. Ebenfalls abrasiven Verschleiß verursacht der am häufigsten als Bestandteil der festen Luftverunreinigung vorkommende Quarz. Die aus dem Konstruktionsmaterial stammenden bzw. von außen in das System gelangt:.n Verunreinigungen verringern nicht nur die Lebensdauer der geschmierten Teile durch abrasiven Verschleiß, sondern katalysieren auch die Oxydation des Öls, weil diese Verunreinigungen gleichzeitig ausgezeichnete Oxydationskatalysatoren sind. Um die Lebensdauer der geschmierten Konstruktion zu erhöhen und Qualitätsverluste des Öls zu vermeiden, ist es deshalb erforderlich, die Schmieröle so vollständig wie nur möglich zu filtern. Wenn die gegenwärtig verwendeten Ölfeinfilter fehlerfrei arbeiten, beträgt die Verunreinigung des Öls einige Tausendstel g pro 100 ml. Bei einem derartigen Verunreinigungsgrad kann mit Schmierölen der Qualität CD erreicht werden, daß nur alle 1000 Betriebsstunden das Öl gewechselt werden muß.

Durch Verminderung des Ölverunreinigungsgrades, durch wirksameres Filtern des Öls, kann, wie zu erwarten ist, die Zeit zwischen zwei Ölwechseln auf 5000 – 10 000 Betriebsstunden erhöht werden, d. h. in etwa ein Betrieb ohne Ölwechsel verwirklicht werden. Dazu muß der Ölverunreinigungsgrad auf einige $10^{-4}$ g/100 ml heruntergedrückt werden. In der vorliegenden Beschreibung wird das Ölfiltern in dieser Qualität als Feinstfiltern (SF-Filtern) bezeichnet. Durch Umstellen des bisherigen Feinfilters auf SF-Filter können nicht nur die Eigenschaften des Schmieröls vollständiger genutzt und seine Lebensdauer erhöht werden, sondern durch die Verringerung der Menge und der Teilchengröße der mit dem Motoröl zirkulierten abrasiven Teilchen wird auch der Verschleiß vermindert und die Lebensdauer des Motors dadurch günstig beeinflußt.

Je besser jedoch die Filtrierqualität sein soll, um so geringer muß die Porosität wenigstens eines der Filterelemente sein, um so stärker jedoch wächst der Durchflußwiderstand an. Häufig werden als Filteranordnung mehrere Filterelemente unterschiedlicher Porositäten, nämlich ein Grobfilter und ein Feinfilter verwendet. Zur Verringerung des Durchflußwiderstandes der Gesamtanordnung kann man den Grobfilter und den Feinfilter parallel schalten und mittels eines vorgeschalteten Drosselventils dafür sorgen, daß ein bestimmtes Durchsatzverhältnis der beiden Filterelemente vorliegt (DE-A-1 611 051). Am Ausgang der Filteranordnung werden die beiden Zweigströme wieder zusammengeführt. Hier wird daher ein Kompromiß eingegangen zwischen der Gesamtfiltrierqualität einerseits und einem geringen Durchflußwiderstand andererseits. Man hat auch schon vorgeschlagen, zwei Filterelemente unterschiedlicher Porositäten, nämlich ein Grobfilter und ein Feinfilter, hintereinanderzuschalten, wobei zwischen der Austrittsseite des Grobfilters und der Eintrittsseite des Feinfilters von dem aus dem Grobfilter austretenden Öl unter Umgehung des Feinfilters frei durchströmte Öffnungen münden (DE-A-2 840 117). Das Grobfilter hält aus dem Öl Partikel mit einer Nenngröße über 15 µm zurück, während das Feinfilter Partikel mit einer Nenngröße über 5 µm ausfiltert. Der Hauptteil des aus dem Grobfilter austretenden Öls wird vor dem Feinfilter abgezweigt. Dieser Vorschlag geht hauptsächlich von der Überlegung aus, daß der Hauptteil des Schmieröls z. B. für die Schmierung der Hauptlager einer Brennkraftmaschine nur mittels des Grobfilters gereinigt zu werden braucht, wohingegen für spezielle Schmierzwecke ein nur geringer Anteil an feiner gefiltertem Öl ausreicht. Das aus dem Grobfilter austretende Filtrat kann beispielsweise zur Schmierung von Lagern verwendet werden, bevor es in die Ölwanne zurückgeführt und dort mit dem Feinfiltrat nach dessen Verwendung für den speziellen Schmierzweck wieder vermischt wird, oder es können auch beide Filtrate unmittelbar in die Ölwanne geleitet und dort wieder vermischt werden. Beide dieser Maßnahmen erbringen jedoch keine wesentliche Verbesserung der Gesamtfiltrierqualität, da nach dem bekannten Vorschlag der Hauptteil des Öls das Feinfilter umgehen soll. Außerdem ist durch die Maßnahme, den Hauptteil des Öls vor dem Feinfilter abzuzweigen, dessen Durchgangswiderstand nicht beeinflußt.

Durch die Erfindung wird die Aufgabe gelöst, das Feinstfiltern zu ermöglichen und gleichwohl den durch den Einbau von Feinstfiltern in das Filtersystem bisher verursachten großen Widerstand wesentlich zu vermindern.

Dies wird bei einer Filteranordnung zum Filtern von Flüssigkeiten, vorzugsweise zum Filtern von Motorenöl, mit zwei hintereinandergeschaltet angeordneten Filterelementen unterschiedlicher Porosität, von denen das Filterelement geringerer Porosität dem Filterelement größerer Porosität nachgeschaltet ist, und mit zwischen der Austrittsseite des Filterelementes größerer Porosität und der Eintrittsseite des Filterelementes geringerer Prosität mündenden, von einem Teil der Flüssigkeit unter Umgehung des Filterelementes geringerer Porosität frei durchströmten Öffnungen gemäß der Erfindung dadurch erreicht, daß die frei durchströmten Öffnungen die Eintrittsseite und die Austrittsseite des Filterelementes geringerer Porosität unter Reduzierung von dessen Durchgangswiderstand unmittelbar verbinden.

Durch die Erfindung kann daher als Filterelement geringerer Porosität zur Verbesserung der Filtrierqualität ein Feinstfilter verwendet werden, mit welchem trotz des Vorhandenseins der ihn umgehenden frei durchströmten Öffnungen, die seinen Durchgangswiderstand merklich reduzieren, im Verlauf der kontinuierlichen Flüssigkeitszirkulation durch die Filteranordnung auch feinste Verunreinigungsteilchen ständig abgefiltert werden.

Die Erfindung wird im folgenden anhand der Zeichnungen mit Hilfe von Ausführungsbeispielen näher erläutert. In der Zeichnung zeigt

Fig. 1 ein Blockschema des Schmierölfiltersystems von Motorenölen, versehen mit einer erfindungsgemäßen Feinstfiltereinheit,

Fig. 2 den Querschnitt durch eine als Beispiel gewählte erfindungsgemäße Filteranordnung,

Fig. 3 den Schnitt B-B durch die Filteranordnung gemäß Fig. 2,

Fig. 4 ein weiteres Ausführungsbeispiel der erfindungsgemäßen Filteranordnung,

Fig. 5 den Längsschnitt D-D durch die Filteranordnung gemäß Fig. 4 und

Fig. 6 eine Ausführungsform der Zwischenversteifungen.

Am Eingang der Filteranordnung gelangt die ungefilterte Flüssigkeit aus dem Flüssigkeitsraum 1 durch das Grobfilter 2 in den Raum der grobgefilterten Flüssigkeit 3. Falls das Grobfilter 2 verstopft ist, gelangt die Flüssigkeit über eine ein Rückschlagventil 4 enthaltende Umgehungsleitung 5 direkt in den Schmierraum 6. Aus dem Raum der grobgefilterten Flüssigkeit 3 gelangt diese durch das Feinfilterelement 7 in den Raum der feingefilterten Flüssigkeit 8. Falls das Feinfilterelement 7 verstopft ist, gelangt die Flüssigkeit durch eine ein Rückschlagventil 9 enthaltende Umgehungsleitung 10 unmittelbar in den Schmierraum 6.

Bei den herkömmlichen Filteranordnungen ist der Raum der feingefilterten Flüssigkeit 8 bereits der Schmierraum 6. Bei der erfindungsgemäßen Anordnung ist zwischen dem Raum der feingefilterten Flüssigkeit 8 und dem Schmierraum 6 eine Feinstfiltereinheit 11 vorgesehen. Die Feinstfiltereinheit 11 besteht aus einem Feinstfilterelement 12 und einer oder mehreren, mit dem Feinstfilterelement 12 parallel geschalteten und dieses daher umgehenden frei durchströmten Öffnungen 13.

Falls erforderlich, können in der Filteranordnung auch mehrere parallele Zweige vorgesehen sein. Die parallelen Zweige können aus jeweils nur einer Filterart ausgebildet sein in der Weise, daß nur mehrere Grobfilter 2 oder mehrere Feinfilterelemente 7 oder mehrere Feinstfiltereinheiten 11 parallel zueinander angeordnet sind, jedoch können auch zwei der Filterarten oder alle drei Filterarten als parallele Zweige ausgebildet sein.

Im folgenden werden Ausführungsbeispiele beschrieben, bei denen ein Feinfilterelement 7 und eine Feinstfiltereinheit 11 vorgesehen sind. In diesem Fall kann aus dem Feinfilterelement 7 und der Feinstfiltereinheit 11 eine Einheit (Baugruppe) gebildet werden. Das Feinfilterelement 7 und das Feinstfilterelement 12 sind dabei zweckmäßig als Zylinderflächen ausgebildet, deren senkrecht zu den Filterachsen verlaufender Querschnitt eine in sich geschlossene Kurve bildet. (Unter dem Begriff Zylinder wird hier nicht nur der Zylinder mit Kreisquerschnitt verstanden, sondern jeder Hohlkörper, dessen Mantellinien parallel zur Achslinie verlaufen.) Diese Zylinderflächen können ineinandergeschachtelt angeordnet werden. Wenn in Richtung von innen nach außen gefiltert wird, ist das Feinfilterelement 7 der innere Teil. Bei umgekehrter Filterrichtung ist das Feinstfilterelement 12 innen.

Bei einer weiteren bevorzugten Ausführungsform sind das Feinfilterelement 7 und das Feinstfilterelement 12 koaxial um eine gemeinsame Filterachse 14 angeordnet.

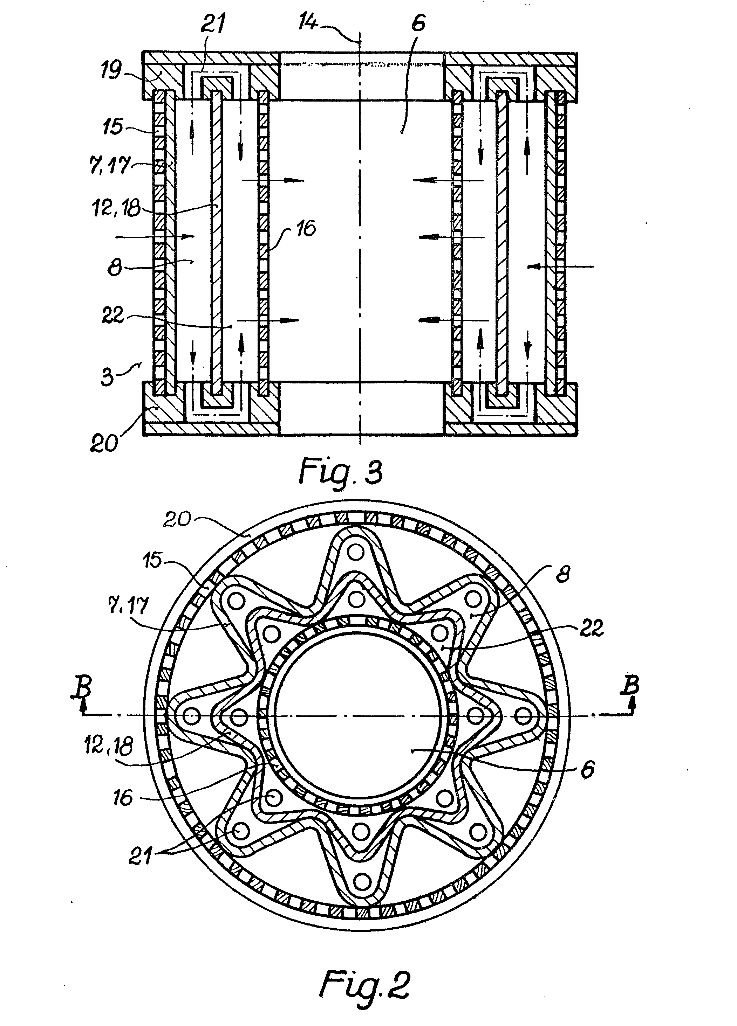

In Fig. 2 ist eine Ausführungsform der Erfindung im Schnitt senkrecht zur Filterachse 14 gezeigt. Zwischen einer kreiszylinderförmigen äußeren gelochten Versteifung 15 und einer ebenfalls kreiszylinderförmigen inneren gelochten Versteifung 16 sind das Feinfilterelement 7 und das Feinstfilterelement 12 angeordnet, die als im Querschnitt eine sternförmige, in sich geschlossene Kurve 17 bzw. 18 aufweisende Fläche ausgebildet sind. Bei diesem Beispiel geht die Strömungsrichtung von außen nach innen, deshalb ist das Feinfilterelement 7 außen angeordnet. Die Sterne haben die gleiche Anzahl Zacken. Das Feinfilterelement 7 und das Feinstfilterelement 12 sind koaxial angeordnet, und die Zacken der sternförmigen geschlossenen Kurve 18 des innen angeordneten Feinstfilterelementes 12 ragen in die Zacken der sternförmigen geschlossenen Kurve 17 des Feinfilterelementes 7 hinein.

Das Feinfilterelement 7 und das Feinstfilterelement 12 sind die Summen der durch die Kurven 17 und 18 parallel zur Filterachse 14 verlaufenden Mantellinien. Jeweils an den Innenscheiteln der Zacken der sternförmigen Kurven 17 und 18 liegen das Feinfilterelement 7 und das Feinstfilterelement 12 zweckmäßig aufeinander auf. An den Außenscheiteln der Zacken sind die sternförmigen Kurven 17 und 18 jedoch etwas voneinander entfernt, und dadurch wird zwischen ihnen der Raum 8 für die feinfiltrierte Flüssigkeit gebildet, während in den Zacken der sternförmigen Kurve 18 der Raum 22 für die feinstfiltrierte Flüssigkeit ausgebildet ist.

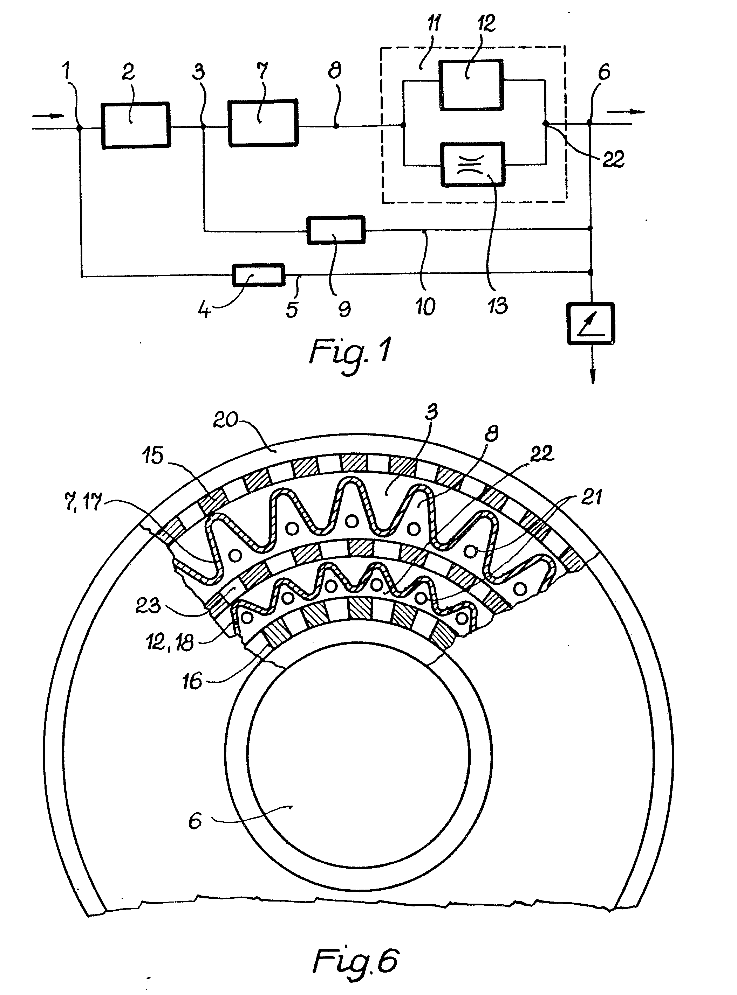

Der von der inneren Versteifung 16 und der äußeren Versteifung 15 gebildete zylinderförmige Raum ist an der einen Seite durch eine Stirnplatte 19, und an der anderen Seite durch eine Stirnplatte 20 abgegrenzt. Bei der in den Fig. 2 und 3 gezeigten Ausführungsform sind in diesen Stirnplatten 19 und 20 U-förmige Kanäle 21 ausgebildet. Diese Kanäle 21 entsprechen den in der schematischen Ausbildung gemäß Fig. 1 angedeuteten, freidurchströmten Öffnungen 13. Wie aus Fig. 3 ersichtlich ist, sind die Kanäle 21 so angeordnet, daß die ihre Mittellinien enthaltenden Ebenen mit den jeweils durch die Außenscheitel der Zacken der sternförmigen, geschlossenen Kurven 17 und 18 hindurchgehenden, die gemeinsame Filterachse 14 enthaltenden Ebenen zusammenfallen. Auf diese Weise verbinden die Kanäle 21 den Raum 8 der feingefilterten Flüssigkeit mit dem hinter dem Feinstfilterelement 12 befindlichen Raum 22 der feinstfiltrierten Flüssigkeit, aus welchem die Flüssigkeit unmittelbar in den Schmierraum 6 gelangt.

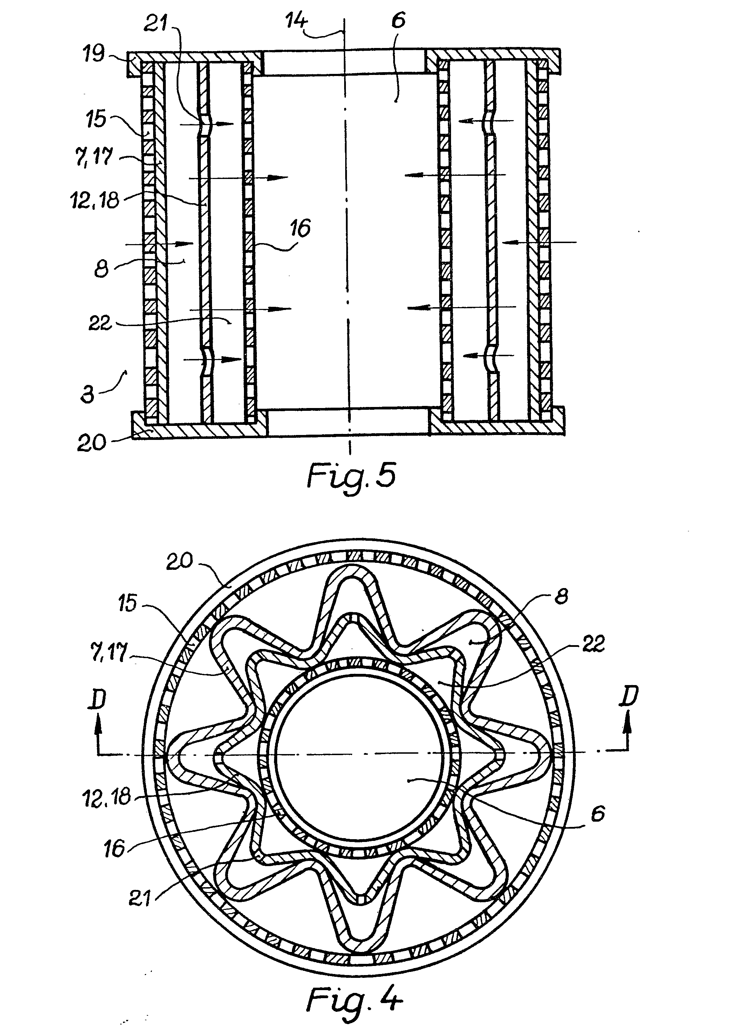

Das in den Fig. 4 und 5 gezeigte Ausführungsbeispiel weicht dadurch von dem in den Fig. 2 und 3 dargestellten ab, daß die frei durchströmten Öffnungen 13 in Form der Kanäle 21 nicht in den Stirnplatten 19, 20, sondern in dem Feinstfilter 12 selbst ausgebildet sind und die Stirnplatten 19 und 20 daher dünner ausgeführt werden können.

Das Feinfilterelement 7 und das Feinstfilterelement 12 werden vorteilhaft als auswechselbare, aus Papier bestehende Sternfiltereinlage gefertigt.

Falls eine weitere Versteifung notwendig ist, so kann zwischen dem Feinfilterelement 7 und dem Feinstfilterelement 12 eine weitere, als gelochter Zylindermantel ausgebildete Zwischenversteifung 23 angebracht sein, wie dies in Fig. 6 gezeigt ist.

Wird das Feinstfilterelement 12 in eine Filteranordnung für Motoröl eingebaut, so werden durch dieses im Laufe der kontinuierlichen Zirkulation des gesamten Motoröls die sehr kleinen Verunreinigungsteilchen dauernd entfernt. Dadurch wird die Katalysatorwirkung der die chemische Degradation des Öls fördernden Verunreinigungen vermindert, die Zeitdauer zwischen zwei Ölwechseln erhöht. Durch Entfernen der abrasiven Stoffe aus dem Öl wird ferner die sogenannte innere abrasive Verschleißwirkung vermindert, wodurch die Lebensdauer des Motors bzw. der geschmierten Teile erhöht wird.

Die Feinst-Ölfilter, mit denen diese Vorteile erreicht werden können, sind mit den zur Herstellung von Ölfiltern dienenden Vorrichtungen herstellbar.

Das Feinstfiltern kann bei jedem Schmiersystem angewendet werden. Die Feinstfilter können gegen die üblichen Filter mit Papiereinlage ausgewechselt werden. Bei Ausbildung entsprechender Anschlüsse können auch die Zentrifugalfilter mit Nebenstromkreis durch die Feinstfilter ersetzt werden.

**Patentansprüche**

1. Filteranordnung zum Filtern von Flüssigkeiten, vorzugsweise zum Filtern von Motorenöl, mit zwei hintereinandergeschaltet angeordneten Filterelementen (7, 12) unterschiedlicher Porosität, von denen das Filterelement (12) geringerer Porosität dem Filterelement (7) größerer Porosität nachgeschaltet ist, und mit zwischen der Austrittsseite des Filterelementes (7) größerer Porosität und der Eintrittsseite des Filterelementes (12) geringerer Porosität mündenden, von einem Teil der Flüssigkeit unter Umgehung des Filterelementes (12) geringerer Porosität frei durchströmten Öffnungen (13, 21), dadurch gekennzeichnet, daß die frei durchströmten Öffnungen (13, 21) die Eintrittsseite und die Austrittsseite des Filterelementes (12) geringerer Porosität unter Reduzierung von dessen Durchgangswiderstand unmittelbar miteinander verbinden.

2. Filteranordnung nach Anspruch 1, dadurch gekennzeichnet, daß die frei durchströmten Öffnungen (21) in dem Filterelement (12) geringerer Porosität selbst ausgebildet sind.

3. Filteranordnung nach Anspruch 1, mit die rohrförmigen, ineinander angeordneten Filterelemente haltenden Stirnplatten (19, 20), dadurch gekennzeichnet, daß die frei durchströmten Öffnungen (21) in Gestalt von Verbindungskanälen zwischen der Eintrittsseite und der Austrittsseite des Filterelementes (12) geringerer Porosität in den Stirnplatten (19, 20) ausgebildet sind.

**Claims**

1. A filter arrangement for filtering liquids, preferably for filtering motor oil, provided with two series-connected filter elements (7, 12) of different porosity of which the filter element (12) of lower porosity is arranged downstream of the filter element (7) of higher porosity, and apertures (13, 21) opening between the outlet side of the filter element (7) of higher porosity and the inlet side of the filter element (12) of lower porosity through which a portion of the liquid flows freely to by-pass the filter element (12) of lower porosity, characterized in that the apertures (13, 23) for free through-flow reduce the flow resistance of the filter element (12) of lower porosity by directly interconnecting the inlet side and the outlet side of the filter element (12) of lower porosity.

2. A filter arrangement according to Claim 1, characterized in that the apertures (21) for free through-flow are formed in the filter element (12) of lower porosity itself.

3. A filter arrangement according to Claim 1, provided with tubular end plates (19, 20) for holding the filter elements that are arranged inside one another, characterized in that the apertures (21) for free through-flow are formed in the end plates (19, 20) in the form of connecting channels between the inlet side and the outlet side of the filter element (12) of lower porosity.

## Revendications

1. Installation de filtration pour filtrer des liquides, de préférence pour filtrer de l'huile pour moteur, avec deux éléments filtrants (7, 12) disposés ensérie, qui présentent, respectivement, des porosités différentes, l'élément filtrant (12) de moindre porosité étant disposé en aval de l'élément filtrant (7) de plus grande porosité, et avec des ouvertures (13, 21) débouchant entre le côté sortie de l'élément filtrant (7) de plus grande porosité et le côté entrée de l'élément filtrant (12) de moindre porosité et traversée librement par une partie du liquide, qui contourne l'élément filtrant (12) de moindre porosité, caractérisée en ce que les ouvertures (13, 21) traversées librement relient directement le côté entrée au côté sortie de l'élément filtrant (12) de moindre porosité en réduisant la résistance de celui-ci à l'écoulement qui le traverse.

2. Installation de filtration selon la revendication 1, caractérisée en ce que les ouvertures (21) librement traversées sont formées dans l'élément filtrant (12) de moindre porosité lui-même.

3. Installation de filtration selon la revendication 1, avec des plaques frontales (19, 20) maintenant les éléments filtrants tubulaires disposés l'un dans l'autre, caractérisée en ce que les ouvertures (21) librement traversées sont formées par des canaux de communication ménagés dans les plaques frontales (19, 20) entre le côté entrée et le côté sortie de l'élément filtrant (12) de moindre porosité.

Fig. 1

Fig.6

7

Fig. 3

Fig. 2

**Fig. 5**

**Fig. 4**